# FASCICULE DE BREVET EUROPEEN

(11) **EP 1 451 066 B1**
(45) Date de publication et mention de la délivrance du brevet: **17.03.2010**
(21) Numéro de dépôt: 02795351.2
(22) Date de dépôt: 29.10.2002
(51) Int. Cl.: B64C 27/28

(54) **BOITE DE TRANSMISSION BASCULANTE A LIAISON PIVOTANTE A PALIERS LISSES**
KIPPGETRIEBE MIT GLEITLAGER-SCHWENKVERBINDUNG
TILTING TRANSMISSION GEARBOX COMPRISING A PIVOTING CONNECTION WITH PLAIN BEARINGS

(30) Priorité: 06.11.2001 FR 0114330
(43) Date de publication de la demande: 01.09.2004
(73) Titulaire: EUROCOPTER, 13725 Marignane Cédex (FR); AVIO S.p.A., 10135 Torino (IT)
(72) Inventeur: SANDRART, Thierry, F-13880 Velaux (FR); THOMASSEY, Lionel, F-13270 Fos sur Mer (FR); ORSINI, Giacomo, I-15073 Castellazo Bormida (IT)
(74) Mandataire: GPI & Associés
(86) Numéro de dépôt international: PCT/FR2002/003714
(87) Numéro de publication internationale: WO 2003/039952

(56) Documents cités:
- FR-A- 2 791 319
- FR-A- 2 791 634

## Description

L'invention concerne une boîte de transmission basculante, et plus précisément une boîte de transmission de puissance montée pivotante autour d'un axe de basculement, pour l'entraînement en rotation d'au moins un organe mené autour d'un axe de rotation devant pouvoir pivoter autour de l'axe de basculement, sensiblement perpendiculaire à l'axe de rotation de l'organe mené, la boîte de transmission comprenant un carter monté basculant par rapport à, et de préférence entre, deux parties latérales fixes et rigides d'un support par deux paliers coaxiaux autour de l'axe de basculement et espacés l'un de l'autre le long de cet axe de basculement.

La boîte de transmission de puissance basculante selon l'invention peut être utilisée, de manière non limitative, comme boîte de transmission de puissance équipant des aéronefs dont le système de propulsion est orientable, tels que ballons dirigeables ou aéronefs du type dit convertible, ou encore comme boîte de transmission de puissance équipant des éoliennes.

D'une manière générale, la boîte de transmission de puissance basculante selon l'invention est utilisable dans tous les systèmes orientables de propulsion ou de génération d'énergie par rotation qui nécessitent, pour leur bon fonctionnement, un faible débattement axial (dans la direction de l'axe de basculement).

En particulier, à titre d'application pour laquelle la boîte de transmission de puissance basculante selon l'invention présente un grand intérêt pour les Demanderesses, une telle boîte de transmission peut être utilisée pour l'entraînement en rotation, à partir d'au moins une source de puissance, telle qu'un groupe motopropulseur, par exemple du type turbomoteur, d'au moins un rotor basculant d'un aéronef du type dit convertible, pouvant opérer en mode avion ou en mode hélicoptère, et dont l'arbre d'entraînement du rotor pivote autour d'un axe de basculement, de sorte à pouvoir passer d'une position, dans laquelle le rotor fonctionne comme une hélice d'avion, pour le vol en mode avion de l'aéronef, à une position dans laquelle le rotor fonctionne comme un rotor sustentateur d'hélicoptère, pour le vol en mode hélicoptère de l'aéronef.

Une boîte de transmission de puissance basculante pour un tel aéronef convertible à rotors basculants est décrite notamment dans FR 2 791 319 et FR 2 791 634, auxquels on se reportera pour davantage de précisions à ce sujet.

On rappelle cependant que ces deux brevets décrivent un aéronef convertible à rotors basculants, du type dans lequel l'arbre de chaque rotor est entraîné en rotation sur lui-même par un ensemble réducteur avant basculant de l'une respectivement de deux transmissions de puissance comportant chacune également un ensemble réducteur arrière fixe, relié à l'ensemble réducteur avant correspondant, ainsi qu'à l'un respectivement de deux moteurs (turbomoteurs), supportés chacun par l'une respectivement des deux ailes fixes de l'aéronef, et à un arbre d'interconnexion reliant les deux transmissions pour l'entraînement en rotation des deux rotors par l'un quelconque des deux moteurs, en cas de défaillance de l'autre moteur.

L'arbre de chaque rotor, la transmission de puissance correspondante et le moteur correspondant sont logés dans l'un respectivement de deux carénages articulés, comportant chacun une partie avant montée basculante, autour de l'axe de basculement, sur une partie arrière fixe, fixée à l'une respectivement des deux ailes fixes de l'aéronef, et dans laquelle sont logés le moteur correspondant et au moins en partie l'ensemble réducteur arrière de la transmission correspondante, dont l'ensemble réducteur avant, réalisé comme une boîte de transmission principale d'hélicoptère, ainsi que l'arbre du rotor correspondant sont logés dans la partie avant basculante de carénage, et sont montés basculants avec cette partie avant de carénage par rapport à la partie arrière fixe de carénage et l'aile fixe correspondante.

Dans cette application et avec cette architecture de chaque transmission de puissance, la liaison pivotante de l'ensemble réducteur avant basculant ne travaille que sur un secteur angulaire de basculement limité, d'environ 110°, avec une faible vitesse de rotation, comprise entre environ 1 et environ 2 t/mn, et sous charge statique.

Par conséquent, les deux paliers par lesquels le carter de l'ensemble réducteur avant pivotant ou boîte de transmission de puissance basculante est monté(e) basculant(e) sur le support, à savoir la partie arrière fixe de carénage, sont assujettis à un « faux effet Brinnel », qui est particulièrement sensible lorsque les paliers sont des paliers à corps roulants, du type paliers à aiguilles ou à galets.

Le problème à la base de l'invention est de réduire, sinon éliminer totalement, ce « faux effet Brinnel » au niveau des paliers, et, d'une manière générale, de proposer un montage basculant de la boîte de transmission de puissance sur son support qui convienne mieux aux diverses exigences de la pratique que les réalisations de l'état de la technique, et plus précisément qui offre un meilleur comportement dynamique du système de propulsion dans lequel une telle boîte de transmission de puissance basculante est intégrée, en particulier par la réduction des pressions dans les paliers précités, et des frottements lors des débattements de ce système de propulsion autour de l'axe de basculement.

A cet effet, la boîte de transmission de puissance basculante, du type présenté ci-dessus, se caractérise en ce que les deux paliers sont des paliers lisses dont chacun comprend :
- une partie fixe, solidaire de l'une respectivement des deux parties latérales dudit support, et comportant un manchon sensiblement cylindrique, qui est sensiblement coaxial au manchon de ladite partie fixe de l'autre palier, autour de l'axe de basculement,
- une partie pivotante, solidaire dudit carter basculant, et comportant un tourillon annulaire sensiblement cylindrique monté pivotant autour dudit manchon de la partie fixe dudit palier, et sensiblement coaxial au tourillon correspondant de la partie pivotante de l'autre palier, et
- une bague d'usure, comportant une partie tubulaire cylindrique, engagée axialement entre ledit manchon de ladite partie fixe et ledit tourillon de ladite partie mobile, et une collerette radiale, en saillie radialement vers l'extérieur de ladite partie tubulaire et par rapport à son axe, et solidaire d'une extrémité axiale de ladite partie tubulaire qui est tournée vers ladite partie latérale correspondante du support.

Avantageusement, le carter est monté basculant entre les deux parties latérales fixes et rigides du support, et les manchons des parties fixes des deux paliers lisses s'étendent l'un vers l'autre, entre lesdites parties latérales dudit support.

Afin de ne pas introduire de couple résistant, lors du basculement de la boîte de transmission, il est avantageux que la bague d'usure soit réalisée à base d'un matériau à faible coefficient de frottement, par exemple, en PTFE.

En outre, pour un meilleur montage basculant du carter grâce aux paliers, la bague d'usure d'au moins un palier, et de préférence de chacun d'eux, est fixée à la partie pivotante dudit palier.

La fixation de la bague d'usure sur la partie pivotante du palier correspondant est assurée, de manière avantageusement simple, par au moins trois vis traversant, dans une direction sensiblement parallèle à l'axe de basculement, ladite collerette radiale, et vissées dans ladite partie pivotante dudit palier correspondant.

Avantageusement de plus, afin de diminuer les pressions de Hertz au niveau des paliers, la partie tubulaire de la bague d'usure d'au moins un palier, et de préférence de chacun d'eux, présente une portée radiale interne dont la forme est légèrement bombée et convexe vers l'axe de basculement, la localisation et l'amplitude de la forme bombée convexe étant telles que ladite portée radiale interne prend une forme sensiblement cylindrique de section circulaire, sous la charge, notamment statique, que supporte ledit carter basculant.

En outre, pour diminuer également les pics de pression aux extrémités axiales de la portée radiale interne de la bague d'usure d'au moins un palier, et de préférence de chacun d'eux, cette portée radiale interne présente à l'une au moins de ses deux extrémités axiales, et de préférence à chacune desdites deux extrémités axiales, un dégagement en forme de chanfrein ou de pan incliné.

Enfin, pour l'application sur un aéronef convertible à rotors basculants, les paliers sont sollicités sur un secteur angulaire de basculement limité, d'environ 110°, avec une faible vitesse de rotation entre environ 1 et environ 2 t/mn, dudit carter basculant chargé statiquement, autour de l'axe de basculement.

L'invention se rapporte également à un aéronef du type convertible, pouvant opérer en mode avion ou en mode hélicoptère, comprenant au moins une boîte de transmission de puissance basculante destinée à entraîner en rotation au moins un rotor autour d'un axe de rotation, à partir d'au moins une source de puissance, telle qu'un groupe motopropulseur, ledit rotor étant monté basculant avec ladite boîte de transmission autour d'un axe de basculement sensiblement perpendiculaire audit axe de rotation pour passer de l'un à l'autre des modes avion et hélicoptère, l'aéronef étant **caractérisé en ce que** ladite boîte de transmission de puissance basculante est une boîte de transmission selon l'invention et telle que définie ci-dessus.

D'autres caractéristiques et avantages de l'invention ressortiront de la description donnée ci-dessous, à titre non limitatif, d'un exemple de réalisation décrit en référence aux dessins annexés sur lesquels :
- la figure 1 est une vue schématique partielle en coupe axiale d'une boîte de transmission de puissance basculante selon l'invention,
- la figure 2 est une vue schématique partielle en coupe transversale à plus grande échelle d'un palier, pour la boîte de transmission de la figure 1,
- les figures 3, 4 et 5 sont des demi-vues en coupe axiale de modes de réalisation de la bague d'usure du palier de la figure 2, avec une courbe associée représentant la pression de Hertz et les pressions aux extrémités axiales de la bague, et
- les figures 6, 7 et 8 représentent schématiquement d'autres demi-coupes axiales de la bague d'usure avec des variantes de réalisation du bombé de sa portée radiale interne.

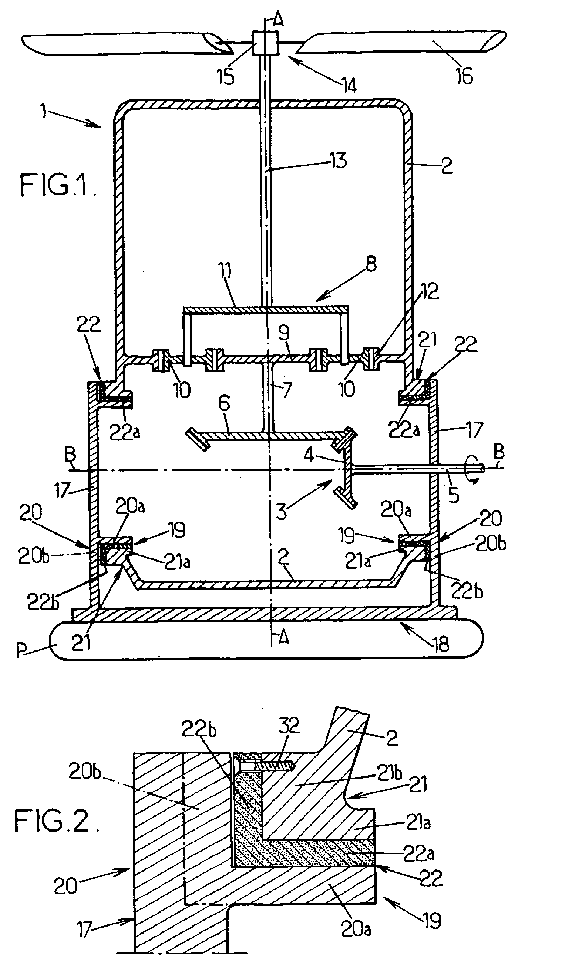

La boîte de transmission de puissance basculante 1 représentée sur la figure 1 comprend un carter basculant 2 logeant un ensemble réducteur qui, dans l'application précitée à l'entraînement en rotation d'un rotor basculant d'un aéronef convertible tel que décrit dans les deux documents de brevet précités, constitue l'ensemble réducteur avant basculant, agencé comme une boîte de transmission principale d'hélicoptère, d'une transmission reliant un moteur à ce rotor et à un arbre d'interconnexion à une autre transmission analogue, cette transmission comportant un ensemble réducteur arrière non-basculant, supporté par une structure fixée à la structure de l'aéronef, par exemple la structure d'une partie arrière fixe d'une carénage motrice, dont la partie avant basculante enveloppe la boîte de transmission de puissance 1.

Dans l'exemple représenté, l'ensemble réducteur logé dans le carter basculant 2 comprend deux étages réducteurs, dont un étage d'entrée 3, qui est un étage réducteur à couple de pignons spiroconiques comportant un pignon conique primaire 4, entraîné en rotation, autour de l'axe de basculement B-B de la boîte de transmission 1, par un arbre coaxial 5, lui-même entraîné en rotation à partir de l'ensemble réducteur arrière non-basculant (non représenté), la denture du pignon conique 4 étant en prise avec celle d'un pignon conique secondaire 6, solidaire en rotation, autour d'un axe A-A, sensiblement perpendiculaire à l'axe de basculement B-B, d'un arbre 7 coaxial d'interconnexion du premier étage réducteur ou étage d'entrée 3 avec le second étage réducteur ou étage réducteur de sortie 8.

Cet étage réducteur 8 est un étage épicycloïdal, comprenant un pignon planétaire 9, solidaire en rotation de l'arbre 7 et du pignon conique 6 autour de l'axe A-A, et dont la denture est en prise avec celle de pignons satellites 10 montés en rotation autour d'axes parallèles à l'axe A-A sur un porte-satellites 11, la denture des pignons satellites 10 étant également en prise avec la denture interne d'une couronne dentée périphérique externe 12 fixée à l'intérieur du carter basculant 2. Le porte-satellites 11 est solidaire en rotation coaxiale, autour de l'axe A-A, d'un mât rotor 13, guidé en rotation dans le carter 2 par des paliers non représentés, et dont l'extrémité supérieure fait saillie à l'extérieur du carter 2 et est solidaire du moyeu 15 supportant des pales 16 d'un rotor 14, ainsi entraîné en rotation autour de l'axe A-A, qui est l'axe de rotation du rotor.

Ce rotor 14 ainsi que la boîte de transmission de puissance 1 comprenant les étages réducteurs 3 et 8 peuvent basculer autour de l'axe de basculement B-B avec le carter 2, monté basculant autour de cet axe B-B entre deux parties latérales 17 fixes et rigides d'un support, désigné dans son ensemble par la référence 18, et qui est lui-même fixe et rigide, par exemple, dans le cas d'application considérée, un support rigidement lié à la structure de la partie arrière fixe du carénage moteur, lequel est lui-même solidaire de la structure d'une aile de l'aéronef (représenté schématiquement en P sur la figure 1).

Le montage pivotant du carter 2 autour de l'axe B-B et entre les deux parties latérales 17 du support 18 est assuré par deux paliers lisses 19 coaxiaux autour de l'axe de basculement B-B et espacés l'un de l'autre le long de cet axe B-B de sorte que chaque palier 19 est adjacent à l'une respectivement des parties latérales 17 de support fixe.

Comme également représenté plus en détail et à plus grande échelle sur la demi-coupe axiale de la figure 2, chaque palier 19 comprend une partie fixe 20, solidaire de la partie latérale de support 17 adjacente, et comportant un manchon 20a, sensiblement cylindrique de section circulaire et sensiblement coaxial au manchon 20a de la partie fixe 20 de l'autre palier 19, autour de l'axe de basculement B-B, chaque manchon 20a s'étendant vers l'autre manchon 20a à partir de la partie latérale fixe 17 correspondante. Chaque partie fixe 20 comporte également un épaulement annulaire 20b, radial (par rapport à l'axe B-B) en saillie vers l'extérieur du manchon 20a, et qui peut être rapporté sur la partie latérale fixe de support 17 correspondante, comme schématiquement représenté en traits interrompus sur la figure 2, ou intégré à cette partie 17.

Chaque palier 19 comprend également une partie pivotante 21, qui est solidaire du carter basculant 2, dans la partie de ce dernier s'étendant sous la couronne dentée 12, cette partie pivotante 21 comportant un tourillon annulaire 21a qui est sensiblement cylindrique de section circulaire, au moins sur sa portée radiale interne, et qui est sensiblement coaxial au tourillon 21a de la partie pivotante 21 de l'autre palier 19.

Dans chaque palier 19, le tourillon 21a de la partie pivotante 21 est monté pivotant autour du manchon 20a de la partie fixe 20, et chaque palier 19 comprend également une bague d'usure 22 réalisée à base d'un matériau à faible coefficient de frottement, par exemple en PFTE, et qui est interposée entre les parties fixe 20 et pivotante 21 du palier 19 correspondant, afin de ne pas introduire de couple résistant lors du basculement du carter 2.

Chaque bague d'usure 22 comporte une partie tubulaire 22a, sensiblement cylindrique et de section circulaire, qui est engagée axialement entre le manchon 20a et le tourillon 21a appartenant respectivement à la partie fixe 20 et à la partie pivotante 21 de ce palier 19. Chaque bague d'usure 22 comporte également une collerette radiale 22b, qui est une collerette annulaire en saillie radialement vers l'extérieur de la partie tubulaire 22a correspondante, et par rapport à l'axe de cette dernière, et qui est solidaire de celle des extrémités axiales de la partie tubulaire 22a qui est tournée vers la partie latérale de support 17 correspondante.

Pour faciliter le montage et améliorer le fonctionnement des paliers 19, chaque bague d'usure 22 est fixée à la partie pivotante 21 du palier 19 correspondant, et, comme représenté sur la figure 2, cette fixation est assurée par exemple par trois vis 32 qui sont vissées, sensiblement parallèlement à l'axe de basculement B-B, au travers d'une zone de la collerette 22b de cette bague 22 qui est en position radialement vers l'extérieur, de sorte que l'extrémité de la tige des vis 32 est vissée dans un épaulement radial 21b raccordant le tourillon 21a de la partie pivotante 21 du palier 19 au reste du carter basculant 2, la tête des vis 32 étant noyée dans la face radiale, en position axiale externe (vers l'extérieur du palier 19) de la collerette 22b.

Dans l'application précitée de la boîte de transmission basculante 1 à l'entraînement d'un rotor basculant d'un aéronef convertible, la liaison pivotante assurée par les paliers 19 entre le carter basculant 2 et le support fixe 18 ne travaille que sur un faible secteur angulaire, limité à environ 110°, sur lequel les paliers 19 sont sollicités, avec une vitesse de rotation autour de l'axe de basculement B-B qui est relativement faible, entre environ 1 et environ 2 t/mn, alors que le carter basculant 2 et donc les paliers 19 sont chargés statiquement. Comme les paliers 19 sont assujettis à un « faux effet Brinnel », leur structure lisse, selon l'invention, est bien plus avantageuse que des paliers à corps roulants, et, en outre, l'utilisation de paliers lisses 19 avec bague d'usure 22 permet une optimisation de la forme de la portée en position radiale interne sur la partie tubulaire 22a de la bague d'usure 22, portée radiale interne sur laquelle s'effectue la liaison pivotante, afin de réduire les pressions de Hertz et le pic de pression à l'une au moins des extrémités axiales de cette portée radiale interne.

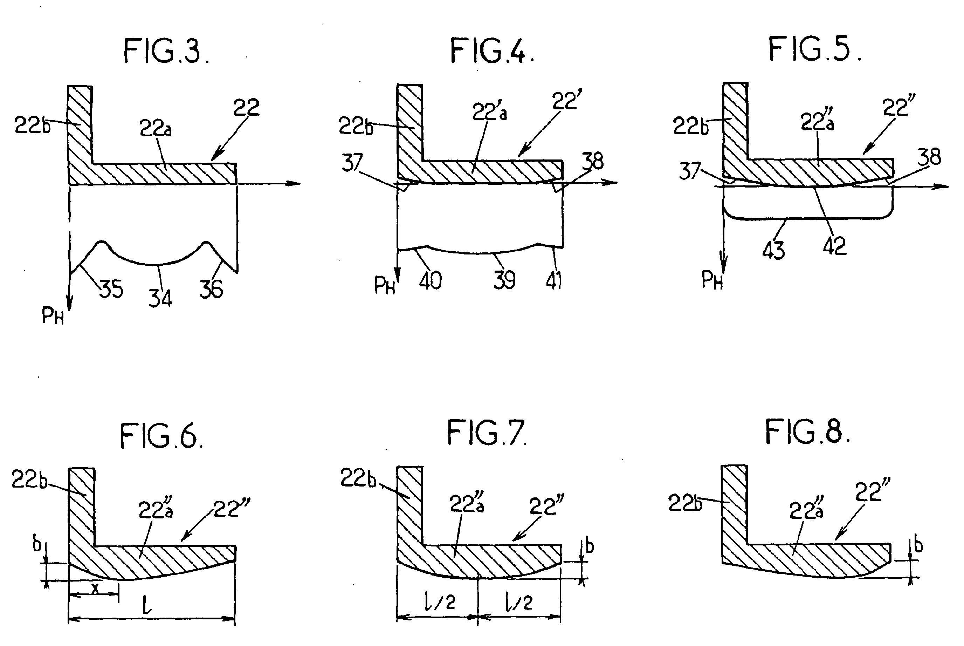

Les figures 3 à 5 représentent schématiquement en coupe transversale trois formes de portée radiale interne de la bague d'usure en superposition avec les courbes représentant, en fonction de la position axiale sur la bague 22, l'amplitude des pressions de Hertz et des pics de pression aux extrémités axiales. La figure 3 correspond à une bague 22 dont les portées radiales interne et externe de la partie tubulaire 22a sont parfaitement cylindriques de section circulaire, et la courbe correspondante 34 des pressions de Hertz montre des pressions importantes avec deux pics de pression en 35 et 36 aux extrémités axiales de la partie tubulaire 22a.

La figure 4 représente une première variante de bague d'usure 22', dans laquelle des dégagements 37 et 38, en forme de chanfrein ou de pan incliné tronconique ont été usinés dans chacune des extrémités axiales de la portée radiale interne de la partie tubulaire 22'a. La courbe de pression de Hertz 39 correspondante représente une pression plus faible et moins variable en fonction de la position axiale que la courbe de pression 34 de la figure 3, avec en outre des pics de pression 40 et 41 très atténués aux extrémités axiales.

La seconde variante de bague d'usure 22" de la figure 5 comporte les mêmes dégagements 37 et 38 que la bague 22' de la figure 4, avec en outre une partie centrale bombée 42, convexe vers l'intérieur de la partie tubulaire 22"a de cette bague 22", avec une amplitude b du « bombé » de l'ordre de quelques micromètres. On constate que la courbe de pression 43 est d'amplitude pratiquement constante sur toute la dimension axiale de la bague 22", y compris à ses deux extrémités axiales, cette amplitude des pressions de Hertz étant en outre inférieure à celles de la courbe 39 de la figure 4, elles-mêmes sensiblement inférieure aux pressions données par la courbe 34 de la figure 3.

La bague d'usure 22 de la figure 2 est donc, de préférence, une bague telle que 22" de la figure 5, sur laquelle, de plus, la localisation et l'amplitude du bombé b dépendent du chargement appliqué sur le palier 19 correspondant et des déformations des pièces environnantes, le sommet de la partie bombée pouvant être situé sensiblement au milieu de la longueur axiale « l » de la partie tubulaire 22"a de la bague 22", comme schématiquement représenté sur la figure 7, ou encore décalé vers l'extrémité axiale du côté de la collerette radiale 22b, comme schématiquement représenté sur la figure 6, ou au contraire, décalé vers l'autre extrémité axiale de cette partie tubulaire 22"a, comme représenté sur la figure 8. Le choix entre ces différentes formes et positions de la partie bombée convexe de la portée radiale interne d'une bague telle que 22" s'effectue de sorte que sous la charge, notamment statique, que supporte le carter basculant 2 et donc le palier 19 correspondant, cette portée radiale interne prend une forme sensiblement cylindrique de section circulaire, qui procure une courbe de pression de Hertz telle que la courbe 43 relativement plate et de faible amplitude de la figure 5, sans pic de pression aux extrémités axiales.

L'utilisation de paliers lisses 19 équipés de bagues d'usure telles que 22, 22' et surtout 22", permet d'obtenir une diminution considérable des frottements lors des pivotements autour de l'axe de basculement B-B, tout en limitant sensiblement les débattements axiaux du système de propulsion comportant un rotor 14 et une boîte de transmission de puissance basculante 1 associée, ainsi qu'une diminution considérable des pressions dans les paliers 19 associés.

Il en résulte un meilleur comportement dynamique du système de propulsion et, au niveau des paliers 19, une élimination du « faux effet Brinnel ».

## Revendications

1. Boîte de transmission de puissance basculante (1), pour l'entraînement en rotation d'au moins un organe mené (14) autour d'un axe de rotation (A-A) devant pouvoir pivoter autour d'un axe de basculement (B-B), sensiblement perpendiculaire audit axe de rotation (A-A) dudit organe mené (14), tel qu'un rotor basculant d'aéronef convertible, ladite boîte de transmission (1) comprenant un carter (2) monté basculant par rapport à deux parties latérales (17) fixes et rigides d'un support (18) par deux paliers (19) coaxiaux autour dudit axe de basculement (B-B) et espacés l'un de l'autre le long dudit axe de basculement (B-B),
**caractérisée en ce que** les deux paliers (19) sont des paliers lisses dont chacun comprend :
- une partie fixe (20), solidaire de l'une respectivement des deux parties latérales (17) dudit support (18), et comportant un manchon (20a) sensiblement cylindrique, qui est sensiblement coaxial au manchon (20a) de ladite partie fixe (20) de l'autre palier (19), autour de l'axe de basculement (B-B),
- une partie pivotante (21), solidaire dudit carter basculant (2), et comportant un tourillon annulaire (21a) sensiblement cylindrique monté pivotant autour dudit manchon (20a) de la partie fixe (20) dudit palier (19), et sensiblement coaxial au tourillon (21a) correspondant de la partie pivotante (21) de l'autre palier (19), et
- une bague d'usure (22), comportant une partie tubulaire cylindrique (22a), engagée axialement entre ledit manchon (20a) de ladite partie fixe (20) et ledit tourillon (21a) de ladite partie mobile (21), et une collerette radiale (22b), en saillie radialement vers l'extérieur de ladite partie tubulaire (22a) et par rapport à son axe, et solidaire d'une extrémité axiale de ladite partie tubulaire (22a) qui est tournée vers ladite partie latérale (17) correspondante du support (18).

2. Boîte de transmission de puissance basculante, selon la revendication 1, **caractérisée en ce que** ledit carter (2) est monté basculant entre lesdites deux parties latérales (17) dudit support (18), et les manchons (20a) des parties fixes (20) desdits deux paliers lisses (19) s'étendent l'un vers l'autre entre lesdites parties latérales (17) dudit support (18).

3. Boîte de transmission selon l'une quelconque des revendications 1 et 2, **caractérisée en ce que** ladite bague d'usure (22) est réalisée à base d'un matériau à faible coefficient de frottement, par exemple, en PTFE.

4. Boîte de transmission selon l'une quelconque des revendications 1 à 3, **caractérisée en ce que** la bague d'usure (22) d'au moins un palier (19) est fixée à ladite partie pivotante (21) dudit palier (19).

5. Boîte de transmission selon la revendication 4, **caractérisée en ce que** la fixation de ladite bague d'usure (22) sur ladite partie pivotante (21) du palier (19) correspondant est assurée par au moins trois vis (32) traversant, dans une direction sensiblement parallèle à l'axe de basculement (B-B), ladite collerette radiale (22b), et vissées dans ladite partie pivotante (21) dudit palier correspondant (19).

6. Boîte de transmission selon l'une quelconque des revendications 1 à 5, **caractérisée en ce que** ladite partie tubulaire (22"a) de ladite bague d'usure (22") d'au moins un palier (19) présente une portée radiale interne dont la forme est légèrement bombée et convexe vers l'axe de basculement (B-B), la localisation et l'amplitude (b) de la forme bombée convexe étant telles que ladite portée radiale interne prend une forme sensiblement cylindrique de section circulaire, sous la charge, notamment statique, que supporte ledit carter basculant (2).

7. Boîte de transmission selon la revendication 6, **caractérisée en ce que** ladite portée radiale interne de ladite bague d'usure (22") d'au moins un palier (19) présente, à l'une au moins de ses deux extrémités axiales, un dégagement (37, 38) en forme de chanfrein ou de pan incliné.

8. Boîte de transmission selon l'une quelconque des revendications 1 à 7, **caractérisée en ce que** lesdits paliers (19) sont sollicités sur un secteur angulaire de basculement limité, d'environ 110°, avec une faible vitesse de rotation entre environ 1 et environ 2 t/mn, dudit carter basculant (2) chargé statiquement, autour de l'axe de basculement (B-B).

9. Aéronef du type convertible, pouvant opérer en mode avion ou en mode hélicoptère, comprenant au moins une boîte de transmission de puissance basculante (1) destinée à entraîner en rotation au moins un rotor (14) autour d'un axe de rotation (A-A), à partir d'au moins une source de puissance, telle qu'un groupe motopropulseur, ledit rotor (14) étant monté basculant avec ladite boîte de transmission (1) autour d'un axe de basculement (B-B) sensiblement perpendiculaire audit axe de rotation (A-A) pour passer de l'un à l'autre des modes avion et hélicoptère, **caractérisé en ce que** ladite boîte de transmission de puissance basculante (1) est une boîte de transmission selon l'une quelconque des revendications 1 à 8.

## Claims

1. Tilting power transmission gearbox (1), for driving in rotation at least one driven element (14) about an axis of rotation (A-A) being able to pivot about a tilting axis (B-B), substantially perpendicular to said axis of rotation (A-A) of said driven element (14), such as a tilting rotor of a convertible aircraft, said transmission gearbox (1) comprising a casing (2) mounted to tilt with respect to two fixed and rigid lateral parts (17) of a support (18) via two bearings (19) coaxial about said tilting axis (B-B) and spaced from one another along said tilting axis (B-B),
**characterised in that** the two bearings (19) are plain bearings, each of which comprises:
- a fixed part (20), integral with respectively one of the two lateral parts (17) of said support (18), and including a substantially cylindrical sleeve (20a) which is substantially coaxial with the sleeve (20a) of said fixed part (20) of the other bearing (19), about the tilting axis(B-B),
- a pivoting part (21), integral with said tilting casing (2), and including a substantially cylindrical annular trunnion (21a) mounted to pivot about said sleeve (20a) of the fixed part (20) of said bearing (19), and substantially coaxial with the corresponding trunnion (21a) of the pivoting part (21) of the other bearing (19), and
- a wear ring (22), including a cylindrical tubular part (22a), engaged axially between said sleeve (20a) of said fixed part (20) and said trunnion (21a) of said movable part (21), and a radial collar (22b), protruding radially towards the outside of said tubular part (22a) and with respect to its axis, and integral with an axial end of said tubular part (22a) which is turned towards said corresponding lateral part (17) of the support (18).

2. Tilting power transmission gearbox according to Claim 1, **characterised in that** said casing (2) is mounted to tilt between said two lateral parts (17) of said support (18), and the sleeves (20a) of the fixed parts (20) of said plain bearings (19) extend towards one another between said lateral parts (17) of said support (18).

3. Transmission gearbox according to either one of Claims 1 and 2, **characterised in that** said wear ring (22) is produced on the basis of a material having a low coefficient of friction, for example, from PTFE.

4. Transmission gearbox according any one of Claims 1 to 3, **characterised in that** the wear ring (22) of at least one bearing (19) is attached to said pivoting part (21) of said bearing (19).

5. Transmission gearbox according to Claim 4, **characterised in that** the attachment of said wear ring (22) to said pivoting part (21) of the corresponding bearing (19) is provided by at least three screws (32) passing, in a direction substantially parallel to the tilting axis (B-B), through said radial collar (22b), and screwed into said pivoting part (21) of said corresponding bearing (19).

6. Transmission gearbox according to any one of Claims 1 to 5, **characterised in that** said tubular part (22"a) of said wear ring (22") of at least one bearing (19) has an internal radial bearing surface whose shape is slightly domed and convex towards the tilting axis (B-B), the location and amplitude (b) of the convex domed shape being such that said internal radial bearing surface takes on a form substantially cylindrical and having a circular section under the load, especially static, supported by said tilting casing (2).

7. Transmission gearbox according to Claim 6, **characterised in that** said internal radial bearing surface of said wear ring (22") of at least one bearing (19) has, at least at one of its two axial ends, a relief (37, 38) shaped as a chamfer or an inclined surface.

8. Transmission gearbox according to any one of Claims 1 to 7, **characterised in that** said bearings (19) are stressed over an angular sector of limited tilting, of approximately 110°, with a low speed of rotation of between approximately 1 and approximately 2 rpm, of said tilting casing (2) loaded statically, about the tilting axis (B-B).

9. Aircraft of the convertible type, capable of operating in aeroplane mode or helicopter mode, comprising at least one tilting power transmission gearbox (1) intended to drive in rotation at least one rotor (14) about an axis of rotation (A-A), from at least one source of power, such as an engine plant, said rotor (14) being mounted to tilt with said transmission gearbox (1) about a tilting axis (B-B) substantially perpendicular to said axis of rotation (A-A) to change between aeroplane mode and helicopter mode, **characterised in that** said tilting power transmission gearbox (1) is a transmission gearbox according to any one of Claims 1 to 8.

## Patentansprüche

1. Leistungs-Kippgetriebe (1) zum Drehen mindestens eines um eine Rotationsachse (A-A) angetriebenen Organs (14) um eine Schwenkachse (B-B), die im Wesentlichen senkrecht zu der Rotationsachse (A-A) des angetriebenen Organs (14) verläuft, wobei das angetriebene Organ (14) ein schwenkbarer Rotor eines wandelbaren Luftfahrzeugs sein kann, wobei das Getriebe (1) ein Gehäuse (2) aufweist, das schwenkbar bezüglich zwei festen und steifen Seitenteilen (17) eines Trägers (18) über zwei zueinander koaxiale Lager (19) um die Schwenkachse (B-B) schwenkbar aufgehängt ist, wobei die beiden Lager entlang der Schwenkachse (B-B) beabstandet sind, **dadurch gekennzeichnet, dass** die beiden Lager (17) Gleitlager sind, von denen jedes aufweist:
- ein festes Teil (20), welches mit jeweils einem der beiden Seitenteile (17) des Trägers (18) fest verbunden ist und eine im Wesentlichen zylindrische Muffe (20a) aufweist, die im Wesentlichen koaxial zur Muffe (20a) des festen Seitenteils (20) des anderen Lagers (19) auf der Schwenkachse (B-B) angeordnet ist,
- ein schwenkbares Teil (21), welches mit dem schwenkbaren Gehäuse (2) fest verbunden ist und ein im Wesentlichen zylindrisches Ringlager (21a) aufweist, welches um die Muffe (20a) des festen Teils (20) des Lagers (19) schwenkbar und im Wesentlichen koaxial zum entsprechenden Lager (21a) des schwenkbaren Teils (21) des anderen Lagers (19) angeordnet ist und
- einen Gleitring (22) mit einem rohrförmigen zylindrischen Teil (22a), der axial zwischen der Muffe (20a) des festen Teils (20) des Lagers (21a) des beweglichen Teils (21) und einem radialen Kragenring (22b) radial zum Äußeren des rohrförmigen Bereichs (22a) und bezüglich seiner Achse vorstehend angeordnet ist, wobei der Ring mit einem axialen Ende des rohrförmigen Bereichs (22a) fest verbunden ist, die auf das entsprechende seitliche Teil (17) des Trägers (18) hin gerichtet ist.

2. Leistungs-Kippgetriebe nach Anspruch 1, **dadurch gekennzeichnet, dass** das Gehäuse (2) schwenkbar zwischen den beiden Seitenteilen (17) des Trägers (18) montiert ist und die Muffen (20a) der festen Teile (20) der beiden Gleitlager (19) sich zwischen den beiden Seitenteilen (17) des Trägers (18) aufeinander zu erstrecken.

3. Getriebe nach einem der Ansprüche 1 und 2, **dadurch gekennzeichnet, dass** der Gleitring (22) aus einem Material mit niedrigem Reibungskoeffizienten, zum Beispiel PTFE, hergestellt ist.

4. Getriebe nach einem der Ansprüche 1 bis 3, **dadurch gekennzeichnet, dass** der Gleitring (22) mindestens eines Lagers (19) am schwenkbaren Teil (21) des Lagers (19) befestigt ist.

5. Getriebe nach Anspruch 4, **dadurch gekennzeichnet, dass** die Befestigung des Gleitrings (22) auf dem schwenkbaren Teil (21) des entsprechenden Lagers (19) durch mindestens drei Schrauben (32) sichergestellt ist, die den Kragenring (22b) in einer zur Schwenkachse (B-B) parallelen Richtung durchqueren und in dem schwenkbaren Teil (21) des entsprechenden Lagers (19) verschraubt sind.

6. Getriebe nach einem der Ansprüche 1 bis 5, **dadurch gekennzeichnet, dass** der rohrförmige Teil (22"a) des Gleitrings (22") mindestens eines Lagers (19) eine innere radiale Auflagefläche aufweist, deren Form leicht konvex und zur Schwenkachse (B-B) hin gewölbt ist, wobei der Ort und die Amplitude (b) der gewölbten konvexen Form derart gewählt sind, dass die innere radiale Auflagefläche eine im Wesentlichen zylinderförmige Form mit kreisrundem Querschnitt unter der Last, insbesondere der statischen Last, die das schwenkbare Gehäuse (2) trägt, einnimmt.

7. Getriebe nach Anspruch 6, **dadurch gekennzeichnet, dass** die radiale innere Auflagefläche des Gleitrings (22") mindestens eines Lagers (19) an mindestens einem seiner beiden axialen Enden einen Freistich (37, 38) in Form einer Abschrägung oder einer geneigten Wand aufweist.

8. Getriebe nach einem der Ansprüche 1 bis 7, **dadurch gekennzeichnet, dass** die Lager (19) in einem winkelmäßig begrenztem Verschwenkbereich von ungefähr 110° mit einer geringen Drehgeschwindigkeit von ungefähr 1 bis 2 Umdrehungen/Minute mit einer Drehbewegung des verschwenkbaren Gehäuses (2) um die Schwenkachse (B-B) statisch beaufschlagt sind.

9. Wandelbares Luftfahrzeug, welches in einer Flugzeugbetriebsart und in einer Helikopterbetriebsart betrieben werden kann, mit mindestens einem Leistungs-Kippgetriebe (1), das dazu bestimmt ist, mindestens einen Rotor (14) um eine Drehachse (A-A) zu drehen, ausgehend von mindestens einer Leistungsquelle, wie beispielsweise einer Antriebsmotorgruppe, wobei der Rotor (14) mit dem Getriebe (1) um eine Schwenkachse (B-B), die im Wesentlichen senkrecht zu der Drehachse (A-A) verläuft, verschwenkbar montiert ist, um vom Modus Flugzeug zum Modus Helikopter oder umgekehrt umzuschalten, **dadurch gekennzeichnet, dass** das Leistungs-Kippgetriebe (1) ein Getriebe nach einem der Ansprüche 1 bis 8 ist.
